# EUROPÄISCHE PATENTSCHRIFT

(11) **EP 3 271 234 B1**
(45) Veröffentlichungstag und Bekanntmachung des Hinweises auf die Patenterteilung: **27.05.2020**
(21) Anmeldenummer: 16704666.3
(22) Anmeldetag: 17.02.2016
(51) Int. Cl.: B62D 1/184, B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 18.03.2015 DE 102015204894
(43) Veröffentlichungstag der Anmeldung: 24.01.2018
(73) Patentinhaber: thyssenkrupp Presta AG, 9492 Eschen (LI); thyssenkrupp AG, 45143 Essen (DE)
(72) Erfinder: KREUTZ, Daniel, 6800 Feldkirch (AT); FORTE, Sebastian, 9493 Mauren (LI); SCHNITZER, Hieronymus, 9487 Gamprin (LI)
(74) Vertreter: thyssenkrupp Intellectual Property GmbH
(86) Internationale Anmeldenummer: PCT/EP2016/053343
(87) Internationale Veröffentlichungsnummer: WO 2016/146331

(56) Entgegenhaltungen:
- EP-A1- 0 772 541
- EP-A1- 2 259 957
- EP-A1- 2 998 194
- WO-A1-2015/016312
- DE-A1-102010 044 795
- US-A1- 2010 300 236
- US-A1- 2012 125 140

## Beschreibung

### Stand der Technik

Die Erfindung betrifft eine Lenksäule für ein Kraftfahrzeug, umfassend eine Stelleinheit mit einer in einem Mantelrohr um ihre Längsachse drehbar gelagerten Lenkspindel, eine Trageinheit, die mit der Karosserie des Kraftfahrzeugs verbindbar ist und in der die Stelleinheit aufnehmbar ist, und eine Spanneinrichtung, die in Fixierstellung die Stelleinheit im Normalbetrieb relativ zur Trageinheit festlegt und die in eine Verstellung der Stelleinheit relativ zur Trageinheit zumindest in Längsrichtung freigibt, wobei die Spanneinrichtung ein Betätigungselement umfasst, welches mit einem Spanngetriebe zusammenwirkt, welches eine Betätigung des Betätigungselements in einen quer zur Längsachse gerichteten Klemmhub zur Verspannung der Trageinheit mit der Stelleinheit umsetzt,
und wobei die Spanneinrichtung mindestens ein Arretierteil aufweist, welches sich in Längsrichtung an der Trageinheit abstützt,
wobei in Fixierstellung ein Formschlusselement des Arretierteils in ein Formschlusselement eines mit der Stelleinheit verbundenen Eingriffsteils in Längsrichtung unverschiebbar eingreift, und in Freigabestellung das Formschlusselement des Arretierteils von dem Formschlusselement des Eingriffsteils beabstandet ist, und eine Bewegung der Stelleinheit relativ zur Trageinheit in Längsrichtung freigibt, wobei das Eingriffsteil über eine separate Energieabsorptionseinrichtung mit der Stelleinheit verbunden ist.

Zur Anpassung der Lenkradposition an die Sitzposition des Fahrers eines Kraftfahrzeugs sind derartige Lenksäulen in unterschiedlichen Ausführungsformen im Stand der Technik bekannt. Neben einer Höhenverstellung durch die Einstellung der Neigung der Lenksäule kann das am hinteren Ende der Lenkspindel angebrachte Lenkrad bei gattungsgemäßen Lenksäulen durch eine Längenverstellung in Richtung der Lenksäulen-Längsachse im Fahrzeuginnenraum positioniert werden.

Die Längenverstellbarkeit wird dadurch realisiert, dass die Stelleinheit, welche die in einem Mantelrohr drehbar gelagerte Lenkspindel umfasst, relativ zur Trageinheit, welche eine fest mit der Fahrzeugkarosserie verbundene Halterung der Lenksäule bildet, in Längsrichtung teleskopartig verstellbar ist und mittels einer lösbaren Spanneinrichtung in unterschiedlichen Längspositionen feststellbar, d.h. lösbar fixierbar ist. Die Spanneinrichtung, auch als Feststelleinrichtung bezeichnet, wirkt auf die von der Trageinheit gehaltene Stelleinheit, wobei in geöffnetem Zustand der Spanneinrichtung - auch als Freigabestellung oder Löseposition bezeichnet - eine Verschiebung der Stelleinheit gegenüber der Trageinheit in Längsrichtung zur Einstellung der Lenkradposition möglich ist und in geschlossenem Zustand - Fixierstellung oder Feststellposition genannt - die Stelleinheit mit der Trageinheit verspannt ist und im normalen Fahrbetrieb die Lenkradposition unter den zu erwartenden mechanischen Beanspruchungen fixiert ist.

Eine gattungsgemäße Lenksäule nach dem Oberbegriff des Anspruchs 1 ist in der DE 10 2008 034 807 B3 beschrieben. Die darin beschriebene Spanneinrichtung umfasst ein Spanngetriebe mit einem als Spannachse ausgebildeten Betätigungselement. Eine über einen Bedienhebel ausgeübte Drehbewegung der Spannachse wird durch das Spanngetriebe in einen Klemmhub umgesetzt, der in Querrichtung eine Kraft auf die Trageinheit ausübt, so dass die darin gelagerte Stelleinrichtung fest verspannt wird, vergleichbar mit der Funktion einer Klemmschelle. Dadurch wird eine kraftschlüssige Fixierung der Stelleinheit in Längsrichtung erreicht.

Als wirksame Maßnahme zur Verbesserung der Insassensicherheit bei einem Fahrzeugzu-sammenstoß, dem sogenannten Crashfall oder Fahrzeugfrontalaufprall, bei dem der Fahrer mit hoher Geschwindigkeit auf das Lenkrad aufprallt, ist es bekannt, die Lenksäule auch in Fixierstellung der Spanneinrichtung in Längsrichtung zusammenschiebbar zu gestalten, wenn ein hohe Kraft auf das Lenkrad ausgeübt wird, die einen Grenzwert überschreitet, der nur im Crashfall auftritt. Um für eine kontrollierte Abbremsung eines auf das Lenkrad auftreffenden Körpers zu sorgen, ist zwischen der Trageinheit und der Stelleinheit, die im Normalbetrieb durch die Spanneinrichtung wie beschrieben miteinander verspannt und fixiert sind, im Crashfall jedoch relativ zueinander zusammengeschoben werden, eine Energieabsorptionseinrichtung eingekoppelt. Diese setzt die eingeleitete kinetische Energie in plastische Verformung eines Energieabsorptionselements um, beispielsweise durch Aufreißen einer Reisslasche oder Verbiegen eines langgestreckten Biegeelements, etwa einem Biegedraht oder Biegestreifen, oder durch die Aufweitung eines Langloches mittels eines Bolzens oder durch die Dehnung eines Blechstreifens oder durch Abtrennen eines Spans mittels eines Hobels.

Die Aktivierung der Energieabsorptionseinrichtung (Crasheinrichtung) erfolgt bei bekannten Lenksäulen durch die Spanneinrichtung beim Fixieren der Stelleinheit. Im Einzelnen wird zur Crashaktivierung ein an der Trageinheit in Längsrichtung unverschiebbar gelagertes Arretierteil mit dem Klemmhub der Spanneinrichtung ebenfalls bewegt und mit einem Formschlusselement, bevorzugt einer Verzahnung, mit einem korrespondierenden Formschlusselement, d.h. bevorzugt einer entsprechenden Verzahnung, eines Eingriffsteils formschlüssig in Eingriff gebracht. Das Eingriffsteil ist über eine Energieabsorptionseinrichtung mit der Stelleinheit verbunden, die im Normalbetrieb nicht beansprucht wird, d.h. eine starre Verbindung zwischen Trageinheit und Stelleinheit bildet. Im Crashfall jedoch wird eine so große Kraft in die Stelleinheit eingeleitet, dass sich die Stelleinheit und die Trageinheit in Längsrichtung gegeneinander bewegen, wobei das Energieabsorptionselement verformt und dadurch die Bewegung abgebremst wird. Dabei sorgt die formschlüssige Verbindung zwischen dem Arretierteil und dem Eingriffsteil dafür, dass sich das feste Ende der Energieabsorptionsvorrichtung über das Eingriffsteil sicher an der Trageinheit abstützen kann. Mit anderen Worten bleibt im Crashfall die formschlüssige Verbindung zwischen dem Arretierteil und dem Eingriffsteil bestehen, so dass die Energieabsorption in der Energieabsorptionsvorrichtung erfolgt, die separat ausgebildet und funktional unabhängig von der Feststelleinrichtung ist. Zur Verstellung der Lenksäule wird die Spanneinrichtung in Freigabestellung gebracht, wobei zum einen die Klemmung der Stelleinheit in der Trageinheit gelöst wird und zum anderen das Arretierteil durch den umgekehrten Klemmhub so weit von dem Eingriffsteil abgehoben wird, das die Formschlusselemente außer Eingriff gelangen und nach erfolgter Verstellung an anderer Stelle wieder verbunden werden können.

Die Crashaktivierung bei der Betätigung der Spanneinrichtung bietet einen erheblichen Sicherheitsgewinn für die Fahrzeuginsassen. Nachteilig ist im Stand der Technik jedoch, dass der Klemmhub der Spanneinrichtung mindestens so groß sein muss, dass auf jeden Fall eine sicheres Eingreifen und Trennen der Formschlusselemente von Arretierteil und Eingriffsteil beim Feststellen und Lösen erfolgt, auch wenn für die Verspannung der Stelleinheit ein kleinerer Klemmhub oder sogar kein Klemmhub, sondern nur eine Klemmkraft, erforderlich ist. Dadurch wird die Gestaltung der Spanneinrichtung hinsichtlich Klemmhub und Kraftübersetzung beim manuellen Feststellen der Spanneinrichtung eingeschränkt, wenn die Funktionalität der Crasheinrichtung sichergestellt werden soll.

Aus der US 2010/0300236 A1 ist eine Lenksäule mit einer Energieabsorptionseinrichtung bekannt. Dabei soll die Energieabsorption im Gegensatz zur oben genannten DE 10 2008 034 807 B3 in der Spanneinrichtung selbst erfolgen, dadurch dass im Crashfall das Eingriffsteil relativ zum Arretierteil durchrutscht, also die formschlüssige Verbindung zwischen dem Arretierteil und dem Eingriffsteil durchbrochen wird. Nachteilig daran ist, dass die eigentlich zur Fixierung vorgesehene Verzahnung allenfalls eine ruckartige und schwer kontrollierbare Energieabsorption bewirken kann, welche daher in der Praxis ungeeignet ist.

Aus der US 2010/300236 A1 ist es bekannt, dass das Arretierteil mit einem Formschlusselement in die Stelleinheit eingreift, wobei eine Energieabsorption durch Lösen des Formschlusses erreicht werden soll. Zur Anpassung des Energieabsorptionsverhaltens ist eine aufwendige Änderung des Arretierteils erforderlich. Aus der EP 2 259 957 A1, der US 2012/ 125140 A1 oder der WO 2015/016312 A1 sind Ausführungen bekannt, bei denen das Arretierteil integriert zur Energieabsorption dienen kann. Auch diese bekannten Ausführungen haben den grundsätzlichen Nachteil, dass zur Änderung des Energieabsorptionsverhaltens eine aufwendige bauliche Änderung des Arretierteils erforderlich ist.

Angesichts der vorangehend erläuterten Problematik ist es eine Aufgabe der vorliegenden Erfindung, ein Lenksäule mit einer Spanneinrichtung und einer separaten Energieabsorptionseinrichtung zur Verfügung zu stellen, die verbesserte Möglichkeiten zur Crashaktivierung bietet, insbesondere die Abhängigkeit vom Klemmhub der Spanneinrichtung überwindet.

### Darstellung der Erfindung

Zur Lösung der vorgenannten Problematik wird erfindungsgemäß vorgeschlagen, dass das Betätigungselement mit einem vom Spanngetriebe separaten Hubgetriebe verbunden ist, welches mit dem Arretierteil verbunden ist, und eine Betätigung des Betätigungselements umsetzt in einen Arbeitshub des Arretierteils relativ zum Eingriffsteil, wobei der Arbeitshub des Hubgetriebes unabhängig vom Klemmhub des Spanngetriebes vorgebbar ist.

Erfindungsgemäß erfolgt die Crashaktivierung wie im Stand der Technik durch eine Betätigung der Spanneinrichtung, beispielsweise mittels eines an dem Betätigungselement angebrachten Feststellhebels oder mittels eines mit dem Betätigungslement gekoppelten elektro-mechanischen Antriebsmechanismus. Ein von dem Betätigungselement antreibbares Spanngetriebe sorgt wie beschrieben für die Klemmung der Stelleinheit in der Trageinheit. Darüber hinaus ist ein zusätzliches Hubgetriebe vorgesehen, welches ebenfalls von dem Betätigungselement antreibbar ist, jedoch unabhängig von dem Spanngetriebe eine Bewegung des Betätigungselements in eine Hubbewegung umsetzt, und zwar in den Arbeitshub des Arretierteils relativ zum Eingriffsteil, der genutzt wird, um die Formschlusselemente an Arretier- und Eingriffsteil miteinander in Eingriff zu bringen, oder aus dem Eingriff zu heben. Unter der "Unabhängigkeit" des Spanngetriebes gegenüber dem Hubgetriebe ist zu verstehen, dass diese konstruktiv unabhängig voneinander ausgelegt werden können, ohne dass sich die Eigenschaften des Spanngetriebes und die Eigenschaften des Hubgetriebe gegenseitig beeinflussen. Somit kann der Arbeitshub unabhängig von dem Klemmhub konstruktiv festgelegt werden, so dass eine entsprechende Designfreiheit vorliegt. In einer einzigen erfindungsgemäßen Lenksäule kann das Spanngetriebe und das Hubgetriebe mittels des Betätigungselements getriebeartig gekoppelt sein, so dass der Klemmhub nicht losgelöst vom Arbeitshub vollzogen werden, da das Klemmgetriebe und das Hubgetriebe durch das Betätigungselement antreibbar sind.

Dadurch, dass erfindungsgemäß für die Crashaktivierung ein eigenes Hubgetriebe vorgesehen ist, kann die Bewegung des Arretierteils von der Klemmbewegung des Spanngetriebes unabhängig gestaltet werden und ein optimierter Bewegungsablauf realisiert werden. So ist es beispielsweise denkbar und möglich, über das Spanngetriebe einen relativ kleinen Klemmhub mit relativ großer Klemmkraft vorzugeben, und durch eine entsprechende Übersetzung des Hubgetriebes dafür zu sorgen, dass bei derselben Bewegung des Betätigungselements der Arbeitshub größer ist als der Klemmhub. Auf diese Weise kann sichergestellt werden, dass auch tief ausgeformte Formschlusselemente am Arretier- und Eingriffsteil, die einen relativ großen Arbeitshub für einen vollständigen formschlüssigen Eingriff bzw. eine vollständige Trennung voneinander erfordern, zur Crashaktivierung sicher und fest miteinander verbunden werden, und beim Lösen der Feststelleinrichtung so weit voneinander abgehoben werden, dass die Formschlusselemente vollständig außer Eingriff sind und eine Verstellung der Stelleinheit in der Trageinheit problemlos möglich ist.

Ein wesentlicher Aspekt der Erfindung ist, dass die Feststelleinrichtung und die Energieabsorptionseinrichtung separate Bauelemente darstellen, welche jeweils eigenständig eine unterschiedliche Funktion haben. Durch wahlweises Lösen oder Feststellen der Feststelleinrichtung mittels der Spanneinrichtung kann die Stelleinheit von der Trageinheit gelöst oder mit dieser verspannt, d.h. fixiert werden, wobei in der Fixierstellung oder Feststellposition die Stelleinheit mit der Trageinheit verspannt ist und im normalen Fahrbetrieb die Lenkradposition unter den zu erwartenden mechanischen Beanspruchungen fixiert ist. Die Feststelleinrichtung dient folglich dazu, die Verstellung der Lenksäule zu ermöglichen. Im festgestellten Zustand ist die von der Feststelleinrichtung separate Energieabsorptionseinrichtung zwischen der Stelleinheit und der Trageinheit eingekoppelt. Diese hat keinen Einfluss auf die Verstellung der Lenksäule, sondern dient nur zur Energieabsorption im Crashfall, in dem die relative Fixierung zwischen Eingriffsteil und Arretierteil durch die Feststelleinrichtung unverändert aufrecht erhalten bleibt.

Als Hubgetriebe kann im Prinzip jede Art von Getriebe eingesetzt werden, welche geeignet ist, eine Bewegung des Betätigungselements, die zur Betätigung der Spanneinrichtung zum Feststellen und Lösen der Lenksäule ausgeübt wird, in eine Hubbewegung des Arretierteils umzusetzen.

In einer bevorzugten Ausführung ist das Spanngetriebe als Kippstift-Spanngetriebe, als Keilscheibe-Nocken-Spanngetriebe oder als Wälzkörper-Kulissenscheibe-Spanngetriebe ausgebildet. Solche Spanngetriebe sind aus dem Stand der Technik hinreichend bekannt.

Eine vorteilhafte Ausführung der Erfindung sieht vor, dass der Arbeitshub des Hubgetriebes quer zum Klemmhub des Spanngetriebes gerichtet ist. Unter "quer" ist dabei auch eine Abweichung in einem Raumwinkel bis zu ±10° zu verstehen. Dadurch ergibt sich eine größere Gestaltungsfreiheit hinsichtlich der Anordnung von Arretier- und Eingriffsteil. Es ist beispielsweise denkbar, die Energieabsorptionseinrichtung seitlich an der Stelleinheit anzubringen, so dass die Bewegung des Arretierteils in etwa tangential zur Stelleinheit erfolgt. Dadurch, dass die Bewegung des Arretierteils nicht mehr in dieselbe Richtung erfolgt wie der Klemmhub der Spanneinrichtung ist es möglich, den zur Verfügung stehenden Bauraum besser auszunutzen.

Bevorzugt ist das Betätigungselement als Spannachse, auch Spannwelle genannt, ausgebildet, die sich quer zur Längsrichtung erstreckt und die zur Betätigung der Spanneinrichtung um ihre Achse drehbar ist, und auf der ein radial vorstehender Nocken drehfest angebracht ist, und wobei das Arretierteil einen Kopplungsabschnitt mit mindestens einer parallel zur Spannachse liegenden Steuerfläche aufweist, mit der die Nockenkontur des Nockens in Wirkeingriff bringbar ist. Unter "parallel" ist ebenfalls eine Abweichung in einem Raumwinkel bis zu ±10° zu verstehen. In dieser Ausführung ist das Hubgetriebe als Nockengetriebe ausgebildet, bei dem ein exzentrisch von der Spannachse abstehender Nocken mit einem Abschnitt seiner außen um die Spannachse umlaufenden Nockenbahn (Nockenkontur) durch Drehung der Spannachse gegen eine mit dem Arretierteil verbundene Steuerfläche bewegt werden kann. Bei der Drehung der Spannachse wird von dem exzentrischen Nockenteil senkrecht zur Spannachse eine Kraft auf die Steuerfläche ausgeübt, wodurch das Arretierteil einen Arbeitshub, nämlich eine translatorische Bewegung quer zur Spannachse ausführt. Bevorzugt wird dabei ausschließlich eine translatorische Bewegung in einer Richtung durchgeführt. Ein derartiges Nockengetriebe ist robust, zuverlässig und mit geringem Aufwand umsetzbar. Außerdem kann durch die Form der Nockenkontur ein Bewegungsprofil mit abschnittsweise unterschiedlicher Kraft-Weg-Umsetzung vorgegeben werden, welches das Arretierteil bei einer Drehung der Spannachse durchläuft. Beispielsweise kann vorgesehen sein, dass das Arretierteil beim Feststellen zunächst schnell auf das Eingriffsteil zubewegt wird, und danach langsamer und mit höherer Andruckkraft fixiert wird. Andere Arten von Hubgetrieben, mit Hebeln, Kippstiften, Gleit- oder Wälzkörpern oder dergleichen können zur Anpassung an die Gegebenheiten des jeweiligen Anwendung ebenfalls verwendet werden.

Eine vorteilhafte Ausführungsform der Erfindung sieht vor, dass mindestens eine Steuerfläche als Hubfläche ausgebildet ist, deren Flächennormale in Eingriffsrichtung der Formschlusselemente an Arretierteil und Eingriffsteil weist. Es kann die Flächennormale der Hubfläche auf das Eingriffsteil gerichtet sein, mit anderen Worten ist die Hubfläche parallel zu den Formschlusselementen am Arretierteil orientiert. Bevorzugt entspricht die Eingriffsrichtung der Bewegungsrichtung des Arretierteils, die dieses zum in und außer Eingriff bringen mit den Formschlusselementen des Eingriffsteils vollführt. Bevorzugt ist die Flächennormale der Steuerfläche im Wesentlichen senkrecht zur Verzahnung ausgerichtet, wobei unter senkrecht in Bezug zu einer Ebene zu verstehen ist, die durch die Kontaktpunkte zwischen der Verzahnung des Arretierteils und des Eingriffsteil gebildet ist. Unter "im Wesentlichen senkrecht" wird eine Abweichung in einem Raumwinkel bis zu ±10° verstanden. Wird nun von dem Nocken eine Kraft auf die Hubfläche ausgeübt, wird das Arretierteil von dem Eingriffsteil abgehoben. Bei der Betätigung der Spannachse wird das Arretierteil so weit vom Eingriffsteil wegbewegt, bis die Formschlusselemente vollständig außer Eingriff sind und eine relative Verstellung von Trageinheit und Stelleinheit vorgenommen werden kann. Dabei kann durch das erfindungsgemäße Nockengetriebe leicht ein entsprechender Arbeitshub verwirklicht werden.

Eine weitere vorteilhafte Ausführung der Erfindung sieht vor, dass mindestens eine Steuerfläche als Druckfläche ausgebildet ist, deren Flächennormale entgegen der Eingriffsrichtung der Formschlusselemente an Arretierteil und Eingriffsteil weist. Das bedeutet, dass die Flächennormale, auch positiver Normalenvektor genannt, der Hubfläche vom Eingriffsteil weg gerichtet ist, mit anderen Worten die Druckfläche bezüglich der Formschlusselemente auf einer gegenüberliegenden Seite des Arretierteils ausgebildet ist. Wird nun von dem Nocken eine Kraft auf die Druckfläche ausgeübt, wird das Arretierteil gegen das Eingriffsteil bewegt. Bei der Betätigung der Spannachse zum Feststellen der Lenksäule wird das Arretierteil so weit gegen das Eingriffsteil bewegt, bis die Formschlusselemente vollständig miteinander im Eingriff sind und die Crasheinrichtung über das Eingriffsteil und das Arretierteil formschlüssig im Kraftfluss in Längsrichtung zwischen Stelleinheit und Trageinheit eingekoppelt ist. Ein für diese Crashaktivierung ausreichender Arbeitshub kann durch das erfindungsgemäße Nockengetriebe leicht verwirklicht werden.

Besonders vorteilhaft ist die Ausbildung einer Kombination einer Hubfläche und einer Druckfläche an einem Arretierteil. Dadurch ist es möglich, bei einer Drehung der Spannachse durch den Nocken eine Zwangssteuerung des Arretierteils zu realisieren, d.h. das Arretierteil wird sowohl beim Feststellen als auch beim Lösen vom Hubgetriebe aktiv mit Kraft beaufschlagt. Die Hubfläche und die Druckfläche bilden praktisch die Innenflächen eine Schaltgabel, die durch den dazwischen angeordneten Nocken in oder gegen die Richtung des Arbeitshubs bewegt wird. Auf diese Weise wird gewährleistet, dass zum einen der Formschluss zur Crashaktivierung sicher geschlossen wird, und zum anderen die Formschlusselemente zum Verstellen der Lenksäule eindeutig voneinander getrennt sind, insbesondere ein Verklemmen oder Verhaken ausgeschlossen wird.

Eine vorteilhafte Weiterbildung der Erfindung sieht vor, dass zwischen der Nockenkontur eines Nockens und einer Steuerfläche ein Federelement angeordnet ist. Das Federelement kann als Druckfeder ausgebildet sein, die eine federnde Ankopplung des Nockens an die betreffende Steuerfläche bewirkt. Das bedeutet, dass, wenn die Nockenkontur in Richtung auf die Steuerfläche zu bewegt wird, über das Federelement eine Kraft auf die Steuerfläche ausgeübt wird. Die Kraft steigt entsprechend an, je stärker die Feder zwischen der Nockenkontur und der Steuerfläche vorgespannt bzw. zusammengedrückt wird. Mit anderen Worten wird von dem Nocken über die Feder eine Steuerkraft auf die Steuerfläche ausgeübt, bevor der Nocken die Steuerfläche berührt, d.h. die Steuerfläche eilt der Nockenkontur um den möglichen Federweg der belasteten Feder voraus. Dadurch ist es möglich, über die als Druckfläche dienende Steuerfläche das Arretierteil mit seinen Formschlusselementen federnd nachgiebig gegen die Formschlusselemente am Eingriffsteil anzudrücken. Falls dabei eine "Zahn-auf-Zahn"-Situation auftritt, bei der ein vorstehender Abschnitt des einen Formschlusselements genau auf einen ebenfalls vorstehenden Abschnitt des gegenüberliegenden Formschlusselements auftrifft und nicht formschlüssig in eine benachbarte Formschluss-Vertiefung einrastet, kann die Bewegung des Nockens und damit des Betätigungselements bis in die Fixierstellung fortgesetzt werden, wobei zunächst nur das Federelement komprimiert wird. Das derart von dem Federelement vorgespannte Arretierteil wird im Betrieb bereits durch geringe Vibrationen, wie sie beim Anlassen des Fahrzeugmotors oder beim Anfahren entstehen, geringfügig aus der blockierten Situation bewegt und rastet dann mit seinem Formschlusselement selbsttätig unter dem Einfluss der Federkraft formschlüssig in das gegenüberliegende Formschlusselement ein. Hierzu wir der verfügbare Federweg des Federelements so bemessen, dass der Nocken in einer "Zahn-auf-Zahn"-Situation bis zum Anschlag bewegt werden kann, d.h. der Nocken in die Endlage der Fixierposition gebracht werden kann. Damit wird wirksam sichergestellt, dass ein Fahrer beim Fixieren der Lenksäule den Bedienhebel des Betätigungselements oder die elektromechanische Antriebsvorrichtung beim Fixieren der Lenksäule das Betätigungselements jederzeit vollständig schließen kann und dabei die Crashaktivierung sicher erfolgt. Bei einem blockierenden Betätigungselement würde ansonsten die Gefahr bestehen, dass entweder durch gewaltsame Betätigung Schäden auftreten, oder die Lenksäule nicht sicher fixiert ist und die Crasheinrichtung nicht aktiviert wird, was auf jeden Fall zu vermeiden ist.

Außerdem kann durch das Federelement Spiel zwischen der Nockenkontur und den Steuerflächen ausgeglichen werden, wenn der Nocken zwischen Feststell- und Löseposition umgeschaltet wird. Dadurch kann unerwünschte Geräuschentwicklung reduziert werden.

In einer bevorzugten Ausführungsform ist das Federelement als Blattfeder, Spiralfeder oder Tellerfeder ausgebildet.

Es ist weiterhin vorteilhaft, dass an der Trageinheit eine Führung ausgebildet ist, in der das Arretierteil in Richtung Eingriffsteil verschieblich geführt ist. Die Führung kann als Führungsnut oder -schiene ausgebildet sein, welche eine geführte Bewegung des Arretierteils relativ zum Eingriffsteil ermöglicht. Darüber hinaus kann die Führung eine formschlüssige Aufnahme bilden, in der das Arretierteil bei einem Crashfall sicher an der Trageinheit abgestützt wird. Die feste Abstützung des Arretierteils ist besonders wichtig, da im Crashfall der gesamte Impuls eines auf das Lenkrad aufprallenden Körpers über das Eingriffsteil auf das Arretierteil übertragen wird und von diesem in die Trageinheit eingeleitet wird. Dies kann durch die Führung sichergestellt werden.

Bevorzugt weist zumindest eine Kontaktfläche der Führung die mit dem Arretierteil zusammenwirkt eine Oberflächenrauheit Rz kleiner oder gleich 10µm auf. Durch diese Oberflächenrauheit kann eine optimale Bewegung des Arretierteils in der Führung gewährleistet werden.

Bevorzugt sind die Formschlusselemente als Verzahnungen ausgebildet sind. Entsprechend kann das Arretierteil als Zahnstein ausgebildet sein mit einer Verzahnung auf der dem Eingriffsteil zugewandten Seite, und das Eingriffsteil als Zahnstange oder -platte mit einer korrespondierenden Gegenverzahnung auf der dem Arretierteil zugewandten Seite. Die Verzahnungen weisen quer zur Längsachse verlaufende Zähne auf, mit bevorzugt spitzen Zahnprofilen. Dadurch wird sichergestellt, dass die weiter oben beschriebene "Zahn-auf-Zahn"-Situation zum einen selten auftritt, zum anderen durch geringste Erschütterungen aufgelöst wird, indem die Zähne formschlüssig ineinander gleiten. Eine vorteilhafte Weiterbildung sieht Zähne mit sägezahnförmigem Querschnitt vor, wobei die Zähne bezüglich der Relativbewegung im Crashfall widerhakenartig gegeneinander gerichtet sind. Dadurch ist gewährleistet, dass die Formschlusselemente auch bei einer extremen Belastung in Längsrichtung nicht voneinander abheben.

In einer bevorzugten Weiterbildung ist das Eingriffsteils und/oder das Arretierteil als Sinterteil ausgebildet. Durch die Ausbildung als Sinterteil mittels eines Sinterverfahren lässt sich das Eingriffsteils und/oder das Arretierteil in einfache und kostengünstige Art und Weise herstellen.

Die Formschlusselemente an dem Eingriffsteil können plattenförmig ausgebildet sein und parallel zur Spannachse und parallel zur Längsachse ausgerichtet sein. Beispielsweise können die Formschlusselemente als Zahnplatte ausgebildet sein, welche einem Abschnitt einer Zahnstange entspricht, in die das als Zahnstein mit korrespondierender Verzahnung ausgebildete Arretierteil eingreifen kann. Unter "parallel" wird ebenfalls eine Abweichung in einem Raumwinkel bis zu ±10° verstanden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäße Lenksäule,
- Figur 2: eine Detailansicht der Lenksäule gemäß Figur 1 in teilweise auseinandergenommenem Zustand,
- Figur 3: eine teilweise Detailansicht der Lenksäule gemäß Figur 2,
- Figur 4: die Hubeinrichtung der Lenksäule gemäß Figur 4 in geöffnetem Zustand,
- Figur 5: die Hubeinrichtung der Lenksäule gemäß Figur 4 in geschlossenem Zustand,
- Figur 6: die Hubeinrichtung der Lenksäule gemäß Figur 4 in einer "Zahn-auf-Zahn"-Situation,
- Figur 7: eine alternative teilweise Detailansicht ähnlich Figur 3,
- Figur 8: Stelleinheit für eine erfindungsgemäßen Lenksäule mit schematisch angedeuteter Crashaktivierung gemäß Figur 7,
- Figur 9: Längsschnitt der Stelleinheit vor einem Crash gemäß Figur 8,
- Figur 10: Längsschnitt der Stelleinheit gemäß Figur 8 nach dem Crash,
- Figur 11: alternative Ausführung der Hubeinrichtung in geöffnetem Zustand,
- Figur 12: die Hubeinrichtung gemäß Figur 11 in geschlossenem Zustand,
- Figur 13: eine weitere alternative Ausführung der Hubeinrichtung in geschlossenem Zustand,
- Figur 14: die Hubeinrichtung gemäß Figur 13 in geöffnetem Zustand.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

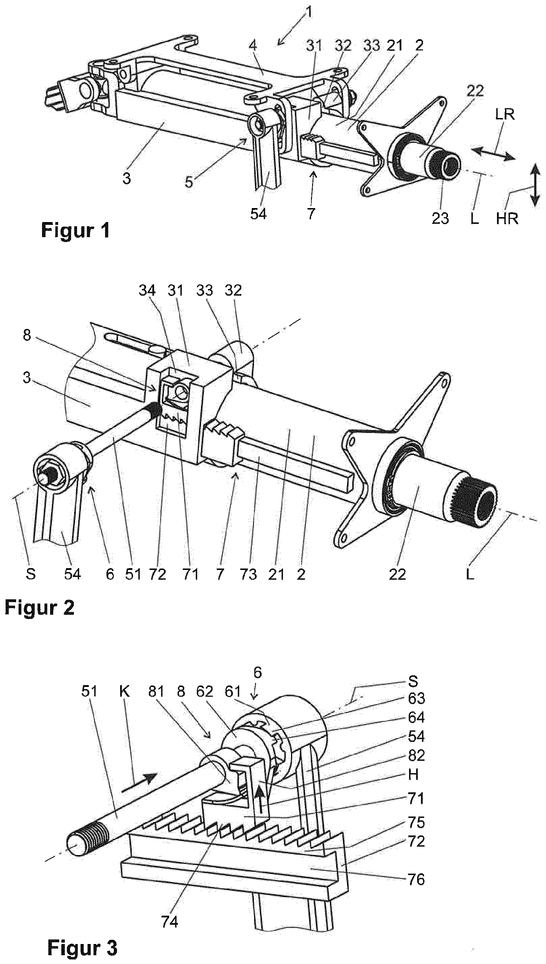

Figuren 1 bis 3 zeigen eine Lenksäule 1, die eine Stelleinheit 2 umfasst, mit einem Mantelrohr 21, in dem eine Lenkspindel 22 um die Längsachse L drehbar gelagert ist. An einem bezüglich der Fahrtrichtung hinteren Abschnitt 23 der Lenkspindel 22 kann ein nicht dargestelltes Lenkrad befestigt werden.

Die Stelleinheit 2 wird in einer Trageinheit 3 gehalten, die ihrerseits an einer Konsoleneinheit 4 befestigt ist, die an einer nicht dargestellten Karosserie eines Kraftfahrzeugs anbringbar ist.

Die Trageinheit 3 umfasst eine Ausnehmung, in der die Stelleinheit 2 aufgenommen ist, wobei die Trageinheit 3 Seitenabschnitte 31 und 32 umfasst, zwischen denen sich ein Schlitz 33 in Richtung der Längsachse L erstreckt und auf die von einer Spanneinrichtung 5 quer zur Längsachse L eine Klemmkraft ausgeübt werden kann, wodurch diese gegeneinander zusammengedrückt werden können und somit der Schlitz 33 verschmälert wird. Dadurch kann das in der Trageinheit 3 angeordnete Mantelrohr 21 der Stelleinheit 2 in geschlossener Stellung (Fixierstellung) der Spanneinrichtung 5 in der Trageinheit 3 festgespannt werden, während in gelöster Stellung (Freigabestellung) die Trageinheit 3 keine Klemmkraft auf das Mantelrohr 21 ausübt, so dass die Stelleinheit 2 zur Einstellung der Lenkradposition in Richtung der Längsachse L, d.h. in Längsrichtung LR verstellbar ist. Bevorzugt kann dabei auch eine Verstellung der Lenkradposition in Höhenrichtung HR erfolgen.

Die Spanneinrichtung 5 weist als Betätigungselement eine Spannachse 51 auf, die um ihre Drehachse S drehbar in den gegenüberliegenden Seitenteilen 31, 32 der Trageinheit 3 gelagert ist. An der Spannachse 51 ist ein Spannhebel 54 zur manuellen Drehung der Spannachse 51 drehfest angebracht.

Die Spannachse 51 wirkt mit einem Spanngetriebe 6 zusammen, welches in der Darstellung von Figur 3 deutlich erkennbar ist, die eine Ansicht bezüglich der Drehachse S in entgegengesetzer Richtung wie Figur 2 zeigt, wobei die Seitenteile 31, 32 zur besseren Übersichtlichkeit weggelassen sind.

In der dargestellten Ausführung umfasst das Spanngetriebe 6 eine fest mit dem Spannhebel 54 und der Spannachse 51 verbundene erste Nockenscheibe 61 und eine mit dem Seitenteil 31 der Trageinheit 3 verbundene zweite Nockenscheibe 62. Die Nockenscheiben 61 und 62 haben axial gegeneinander gerichtete Nocken 63 und 64, die aufeinander gleiten. Zur Fixierung der Stelleinheit 2 wird die Spannachse 51 mittels des Spannhebels 54 gedreht, so dass die Nocken 63 und 64 aus einer Löseposition, in der eine Nocke 63, 64 der einen Nockenscheibe 61, 62 jeweils in eine Vertiefung zwischen den Nocken 64, 63 der jeweils anderen Nockenscheibe 62, 61 eingreift, in eine Fixierposition, in der die Nocken 63, 64 mit ihren Erhebungen axial gegeneinander liegen. Dadurch wird in der Darstellung von Figur 3 ein Klemmhub K auf die Spannachse 51 ausgeübt, was mit dem Pfeil K angedeutet ist. Die Spannachse 51 stützt sich in einem nicht dargestellten Widerlager an dem Seitenteil 32 ab, so dass der Klemmhub K eine Klemmkraft auf die Trageinheit 3 überträgt, wodurch die Seitenteile 31 und 32 gegen das dazwischen liegende Mantelrohr 21 angedrückt werden und die Stelleinheit 2 in der Trageinheit 3 bezüglich einer Verschiebung in Längsrichtung LR fixiert ist.

Zur Größe des Klemmhubs K ist anzumerken, dass dieser prinzipiell nahe bei Null liegen kann, wenn die Trageinheit 3 das Mantelrohr 21 der Stelleinheit 2 bereits berührend umgreift, so dass zur Verspannung lediglich die Klemmkraft auf die Seitenteile 31 und 32 erhöht werden muss, wobei diese sich im geringen Maße auf das Mantelrohr 21 zu bewegen. In der Praxis wird jedoch aufgrund der unvermeidlichen elastischen Verformungen der Trageinheit 3 und der Spanneinrichtung 5 immer ein minimaler Klemmhub K auftreten, wobei dieser in Bereichen zwischen 0,5mm und 4,2mm liegen kann.

Die Crasheinrichtung 7 umfasst ein Arretierteil 71 in Form eines Zahnsteins 71 und ein Eingriffsteil 72 in Form einer Zahnplatte 72. Das als Zahnplatte 72 ausgeführte Eingriffsteil 72 ist über eine Energieabsorptionseinrichtung 73 mit dem Mantelrohr 21 der Stelleinheit 2 verbunden und hat auf einer Seitenfläche, die parallel zur Längsachse L und parallel zur Drehachse S ausgerichtet ist, als Verzahnung 75 ausgebildete Formschlusselemente. Der Zahnstein 71 hat eine der Verzahnung 75 gegenüberliegende, korrespondierende Verzahnung 74, die formschlüssig in die Verzahnung 75 eingreifen kann. Bevorzugt haben die Zähne 741, 751 der Verzahnung 74, 75 einen sägezahnförmigen Querschnitt.

Der Zahnstein 71 ist in Hubrichtung H, die jeweils senkrecht zur Längsachse L und Drehachse S gerichtet ist, in einer Führung 34 an der Trageinheit 3 verschieblich gelagert. Dabei werden die Verzahnungen 74 und 75 bei einer Bewegung in Hubrichtung H voneinander weg bewegt, d.h. gelöst, und bei einer Bewegung entgegen der Hubrichtung H miteinander in Eingriff gebracht, d.h. formschlüssig verbunden.

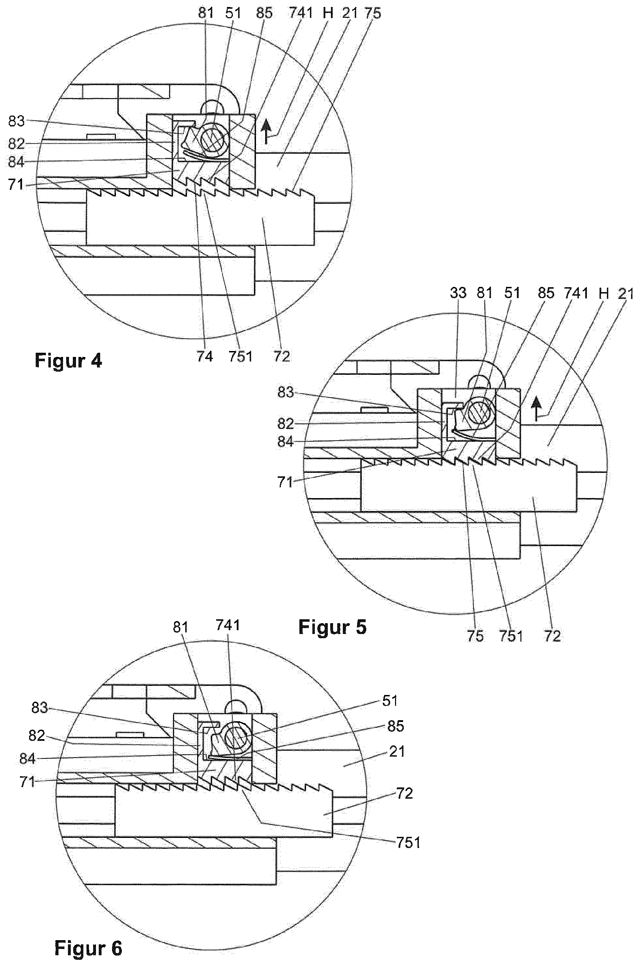

Die Bewegung des Zahnsteins 71 erfolgt mittels eines Hubgetriebes 8, welches von der Spannachse 51 betätigt wird. Hierzu ist auf der Spannachse 51 ein radial vorstehender Nocken 81 drehfest angebracht. Wie sich aus Figur 3 und insbesondere aus den seitlichen Schnittansichten von Figur 4 bis 6 ergibt, ist an dem Zahnstein 71 ein Kopplungsabschnitt 82 ausgebildet, der jeweils eine als Hubfläche 83 und eine als Druckfläche 84 ausgebildete Steuerfläche aufweist. Dabei ist die Druckfläche 84 auf einer der Verzahnung 74 gegenüberliegenden Rückseite ausgebildet, d.h. ihre Flächennormale weist von der Verzahnung 74 weg, wogegen die Hubfläche 83 parallel zur Verzahnung 74 ausgerichtet ist, d.h. ihre Flächennormale weist zur Verzahnung 75 hin. Zwischen der Hubfläche 83 und der Druckfläche 84 ist der Nocken 81 angeordnet, so dass die Nockenkontur in Kontakt mit der Hubfläche 83 und der Druckfläche 84 bringbar ist.

Zwischen der Druckfläche 71 und dem Nocken 81 ist eine Blattfeder 85 als Federelement angeordnet.

Die Funktion des Hubgetriebes 8 wird im Folgenden anhand der Figuren 4, 5 und 6 erläutert.

Figur 4 zeigt die gelöste Stellung bzw. Freigabeposition, in der die Verzahnung 74 des Zahnsteins 71 vollständig von der Verzahnung 75 der Zahnplatte 72 in Hubrichtung H abgehoben, d.h. gelöst ist, wodurch die Crasheinrichtung 7 deaktiviert ist. Diese Freigabeposition des Hubgetriebes 8 entspricht gleichzeitig der Freigabeposition des Spanngetriebes 6, so dass die Stelleinheit 2 relativ zur Trageinheit 3 in Längsrichtung LR verstellt werden kann.

Wird die Spannachse 51 in der gezeigten Darstellung entgegen dem Uhrzeigersinn gedreht, bewegt sich der Nocken von der Hubfläche 83 weg zur Druckfläche 84 hin. Dabei wirkt die Nockenkontur auf die Blattfeder 85, welche zusammengedrückt wird und eine Kraft entgegen der Hubrichtung H auf die Druckfläche 71 ausübt. Mit anderen Worten wird die Bewegung der Nockenkontur über die Blattfeder 85 auf den Zahnstein 71 übertragen. Dadurch bewegt sich der Zahnstein 71 in der Führung 34 in Richtung auf die Zahnplatte 72 zu, bis die in Figur 5 dargestellte geschlossene Stellung (auch Fixierstellung oder Feststellposition genannt) erreicht wird. Der Weg von der geöffneten Stellung bis in die Fixierstellung definiert den Arbeitshub des Hubgetriebes 8.

In der in Figur 5 dargestellten Fixierposition greifen die Verzahnungen 74 und 75 von Zahnplatte 72 und Zahnstein 71 formschlüssig ineinander. Dabei wird der Zahnstein 71 durch die Blattfeder 85 gegen die Zahnplatte 72 angedrückt,wodurch die Crasheinrichtung 7 an die Trageinheit 3 angekoppelt und damit aktiviert ist. Im Crashfall wird die Zahnplatte 72 in der mit dem Pfeil angedeuteten Längsrichtung LR (in der Zeichnung nach links) verschoben, wobei sich die sägezahnförmigen Zahnprofile der Zähne 751 und 741mit ihren steilen Flanken gegeneinander abstützen, wodurch keine Kräfte in Hubrichtung H auf die Verzahnungen 75, 74 ausgeübt werden. Folglich ist die Crasheinrichtung 7 zuverlässig aktiv. Im Crashfall bewegt sich die Stelleinheit 2 relativ zur Trageinheit 3, wobei im Rahmen der Relativbewegung die durch den Fahrzeugführer eingetragene Energie kontrolliert absorbiert wird. Die Zahnplatte 72 weist dafür eine Längsnut 76 auf, in der die Energieabsorptionseinrichtung 73 unter Übermass aufgenommen ist. Durch dieses vorhandene Übermass wird im Crashfall während relative Verschiebung zwischen der an der Stelleinheit 2 fixierten Energieabsorptionseinrichtung 73 und der Zahnplatte 72 die eingetragene Energie abgebaut. Weiterhin ist es denkbar und möglich, alternativ oder zusätzlich zu mindestens einem Biegedraht oder
-streifen 221 ist es möglich, auch andere Energieabsorptionsmechanismen mit der Zahnplatte 72 zu koppeln, beispielweise Reißlaschen, Langlöcher die mittels eines Stiftes aufgeweitet werden, oder kombinierte Biege-Reißlaschen.

In Figur 6 ist der Sonderfall dargestellt, bei dem die Verzahnungen 74 und 75 beim Fixieren durch Bewegung des Zahnsteins 71 entgegen der Hubrichtung H mit den Spitzen der Zähne 741 und 751 aufeinander treffen und zunächst nicht wie in Figur 5 einrasten, was einer "Zahn-auf-Zahn"-Situation entspricht. Dabei ist erkennbar, dass der Nocken 81 sich dennoch wie in Figur 5 in seiner der Fixierposition entsprechenden Stellung befindet. Dabei ist jedoch wegen der blockierten Bewegung des Zahnsteins 71 die Blattfeder 85 zwischen der Nockenkontur und der Druckfläche 84 stärker komprimiert, wodurch ein erhöhter Druck auf den in dieser Situation labil gelagerten Zahnstein 71 ausgeübt wird. Folglich genügt eine geringfügige Erschütterung oder Vibration, um die Zahnspitzen voneinander abgleiten zu lassen und die Verzahnungen 74 und 75 federbelastet in die korrekte Position gemäß Figur 5 einschnappen.

Dadurch kann der Fahrer zum Fixieren der Lenksäule den Spannhebel 54 auf jeden Fall bis zum Anschlag bewegen, wobei die Spannachse 51 die Position gemäß Figur 5 oder 6 erreicht, auch wenn die Bewegung des Zahnsteins 71 zeitweilig durch eine "Zahn-auf-Zahn"-Situation gestört wird. Dabei ist dennoch gewährleistet, dass die Crashaktivierung zuverlässig erfolgt.

Zur Verstellung des Lenkrads wird die Spannachse 51 durch Betätigung des Spannhebels 54 in umgekehrter Richtung gedreht. Dabei wird der Nocken 81 in Richtung des Uhrzeigersinns gedreht und berührt mit seiner Nockenkontur die Hubfläche 83, so dass der Zahnstein 71 aus der in Figur 5 dargestellten Fixierstellung um den Arbeitshub des Hubgetriebes 8 bewegt und damit bis in die in Figur 4 dargestellte Freigabestellung gebracht wird. Der Arbeitshub wird durch entsprechende Gestaltung des Nockens 81 so bemessen, dass die Zähne 741, 751 von Zahnplatte 72 und Zahnstein 71 sicher und vollständig außer Eingriff gebracht werden und voneinander gelöst sind. Dabei erfolgt die Hubbewegung des Zahnsteins 71 durch den Nocken 81 zwangsgesteuert, d.h. vom Nocken 81 wird durch die Betätigung der Spannachse 51 aktiv eine Hubkraft auf den Zahnstein 71 ausgeübt, so dass der Zahnstein 71 sicher gelöst wird, auch wenn seine Beweglichkeit durch Anhaften oder Verklemmen erschwert wäre.

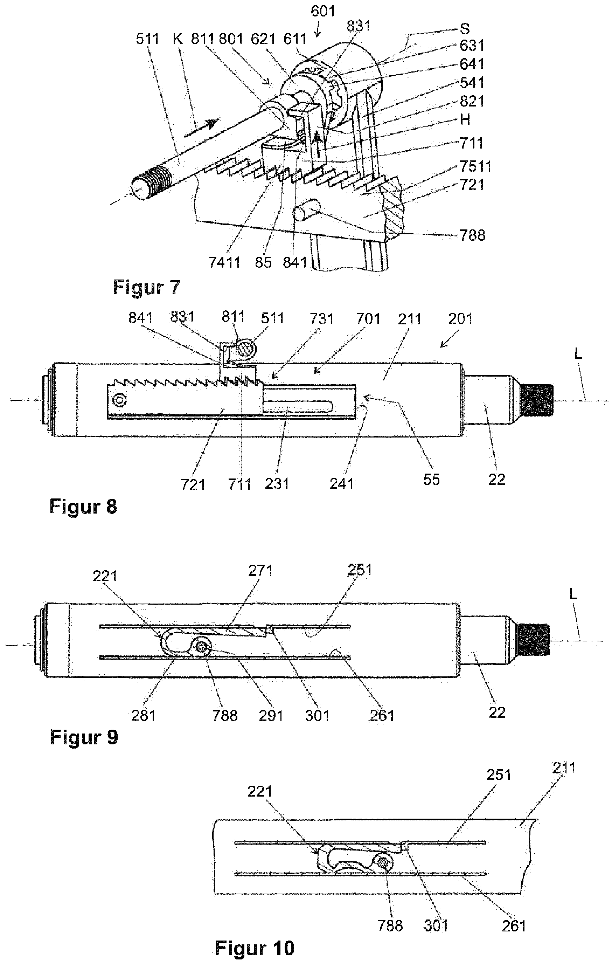

In den Figuren 7 bis 10 ist eine alternative Ausführungsform der Energieabsorption mit einer erfindungsgemäßen Crashaktivierung dargestellt. Dabei weist die Lenksäule einen ähnlichen strukturellen Aufbau wie die Lenksäule aus den Figuren 1 und 2 auf.

In dieser alternativen Ausführung umfasst das Spanngetriebe 601 eine fest mit dem Spannhebel 541 und der Spannachse 511 verbundene erste Nockenscheibe 611 und eine mit dem Seitenteil der Trageinheit verbundene zweite Nockenscheibe 621. Die Nockenscheiben 611 und 621 haben axial gegeneinander gerichtete Nocken 631 und 641, die aufeinander gleiten. Zur Fixierung der Stelleinheit 201 wird die Spannachse 511 mittels des Spannhebels 541 gedreht, so dass die Nocken 631 und 641 aus einer Löseposition, in der eine Nocke 631, 641 der einen Nockenscheibe 611, 621 jeweils in eine Vertiefung zwischen den Nocken 641, 631 der jeweils anderen Nockenscheibe 621, 611 eingreift, in eine Fixierposition, in der die Nocken 631, 641 mit ihren Erhebungen axial gegeneinander liegen. Dadurch wird in der Darstellung von Figur 7 ein Klemmhub K auf die Spannachse 511 ausgeübt, was mit dem Pfeil K angedeutet ist.

Figur 7 zeigt die gelöste Stellung bzw. Freigabeposition, in der die Verzahnung 7511 des Zahnsteins 711 vollständig von der Verzahnung 7411 der Zahnplatte 721 in Hubrichtung H abgehoben, d.h. gelöst ist, wodurch die Crasheinrichtung 701 deaktiviert ist. Diese Freigabeposition des Hubgetriebes 801 entspricht gleichzeitig der Freigabeposition des Spanngetriebes 601, so dass die Stelleinheit 201 relativ zur Trageinheit in Längsrichtung LR verstellt werden kann.

Das erfindungsgemäße Hubgetriebe 801 der Figur 7 ist bzgl. der Funktion identisch mit dem Hubgetriebe 8 in den Figuren 3 bis 6.

Die Crasheinrichtung 701 umfasst das Arretierteil 711 in Form eines Zahnsteins 711 und das Eingriffsteil 721 in Form der Zahnplatte 721. Die Zahnplatte 721 ist über eine Energieabsorptionseinrichtung 731 mit dem Mantelrohr 211 verbunden und hat auf einer Seitenfläche, die parallel zur Längsachse L und parallel zur Drehachse S ausgerichtet ist, als Verzahnung 7511 ausgebildete Formschlusselemente. Der Zahnstein 711 hat eine der Verzahnung 7511 gegenüberliegende, korrespondierende Verzahnung 7411, die formschlüssig in die Verzahnung 7511 eingreifen kann. Bevorzugt haben die Zähne der Verzahnung 7411, 7511 einen sägezahnförmigen Querschnitt. Die Zahnplatte 711 weist einen sich zur Drehachse S parallelen und der Mantelrohr 211 zugewandt erstreckenden Mitnehmer 788 auf.

Die Zahnplatte 721 ist mit einem Biegedraht oder -streifen 221 verbunden, der in einem Gehäuse angeordnet ist, welches von der im Querschnitt U-förmigen Schiene 55 in Verbindung mit einem Abschnitt des Mantelrohrs 211 gebildet wird. Das Eingriffsteil 721 weist hierzu den von einem Stift gebildeten Mitnehmer 788 auf, der durch einen Schlitz 231 in der Wand 241 der Schiene 55 ragt. Der Schlitz 231 erstreckt sich in die Richtung der Längsachse L. Die Schiene weist zusätzlich zu der Wand 241 einen Seitenschenkel 251 und einen Seitenschenkel 261 auf, wobei jeder dieser Seitenschenkel 251, 261 im Wesentlichen parallel zur Längsachse L und zur Drehachse S. Unter "im Wesentlichen parallel" wird eine Abweichung in einem Raumwinkel bis zu ±10° verstanden.

Die Kraftdurchleitung im Crashfall erfolgt vom Zahnstein 711 über die Verzahnungen 7411, 7511 auf die Zahnplatte 721, und von dieser über den quer zur Verzahnungsrichtung abstehenden Mitnehmer 788. Der Mitnehmer 788 steht von der Zahnplatte 721 seitlich, und damit quer zur Bewegungsrichtung H des Zahnsteins 711 ab, und erstreckt sich quer zur Längsachse L durch den Schlitz 231 hindurch. In dieser Richtung greift er formschlüssig in die Bohrung 291 in dem Biegestreifen 221 ein, so dass im Crashfall eine Kraftübertragung parallel zur Längsachse L erfolgt.

Über den durch diesen Schlitz 231 ragenden Mitnehmer 788 ist das Eingriffsteil 721 weiter in Längsrichtung LR der Stelleinheit 201 von dieser verschiebbar geführt. Denkbar und möglich ist auch eine Anordnung des Mitnehmers am Biegedraht oder-streifen 221. Die verschiebbare Führung des Eingriffsteils 721 von der Stelleinheit 2 kann auch in anderer Weise als dargestellt erfolgen.

Der Biegedraht oder -streifen 221 besitzt über eine Umbiegung von 180° verbundene Schenkel 271, 281, die sich im Wesentlichen in Richtung der Längsachse L erstrecken. Die beiden Schenkel 271, 281 liegen an gegenüberliegenden Seiten des Gehäuses an, und zwar an den Innenflächen der Seitenschenkel 251, 261 der Schiene 55. Der Rollbiegeradius des Biegedrahts oder -streifens 221 bei seiner Verformung, insbesondere während der fortschreitenden Biegung, im Crashfall wird dadurch begrenzt und bestimmt.

Zur Verbindung der Zahnplatte 721 mit dem Biegedraht oder -streifen 221 ragt der stiftförmige Mitnehmer 788 in eine Bohrung 291 im Schenkel 281. Andere Verbindungen der Zahnplatte 721 mit dem Biegedraht oder -streifen 221 sind denkbar und möglich.

Der andere, nicht mit der Zahnplatte 721 verbundene Schenkel 271 des Biegedrahts oder -streifens 221 stützt sich an einem Anschlag 301 der Schiene 55 ab, von dem er bei einer Verschiebung der Stelleinheit 201 gegenüber der Trageinheit in Richtung der Längsachse L mitgenommen wird. Andere Verbindungen des Schenkels 271 mit dem Gehäuse, in dem der Biegedraht oder -streifen 221 angeordnet ist, um den Schenkel 271 im Crashfall in Richtung der Längsachse L mitzunehmen, sind denkbar und möglich.

Wenn eine einen Grenzwert überschreitende Kraft in Richtung der Längsachse L wirkt (=Crashfall) so wird die Stelleinheit 201 in Richtung der Längsachse L gegenüber der Trageinheit, die fest mit dem Fahrzeug verbunden ist, (in eine zur Fahrzeugfront weisende Richtung) verschoben, wobei sich teleskopierbare Abschnitte der Lenkspindel 22 ineinander schieben und sich die Stelleinheit 201 gegenüber der vom Zahnstein 711 gehaltenen Zahnplatte 721 verschiebt und hierbei der Biegedraht oder-streifen 221 verformt wird. Diese Verformung umfasst insbesondere die Änderung der Stelle der Umbiegung zwischen den Schenkeln 271, 281. Durch diese plastische Verformung des Biegedrahts oder -streifens 221 wird Energie absorbiert.

Im gezeigten Ausführungsbeispiel vergrößert sich die Dicke des Schenkels 271 zu seinem freien Ende hin, beispielsweise keilförmig. Dadurch und da der Biegedraht oder -streifen 221 zwischen den von den Seitenschenkeln 251, 261 gebildeten Seitenwänden des Gehäuses eingesperrt ist, kommt es bei einer zunehmenden Verschiebung der Stelleinheit 201 gegenüber der Trageinheit der Lenksäule schließlich zu einem Anlaufen des Abschnitts 281 (im Bereich, in dem sie mit der Bohrung 291 versehen ist) an den sich verdickenden Bereich des Schenkels 271, wodurch es zu einer zusätzlichen Verformungsarbeit durch Kompression kommt.

Durch die geometrische Ausbildung des Biegedrahts oder -streifens 221 kann eine ge-wünschte Kennlinie für die Energieaufzehrung erreicht werden. Hierzu kann der Querschnitt des Schenkels 271 über seiner Länge in Bezug auf seine Fläche und/oder in Bezug auf seine Kontur mit einem vordefinierten Verlauf ausgebildet sein.

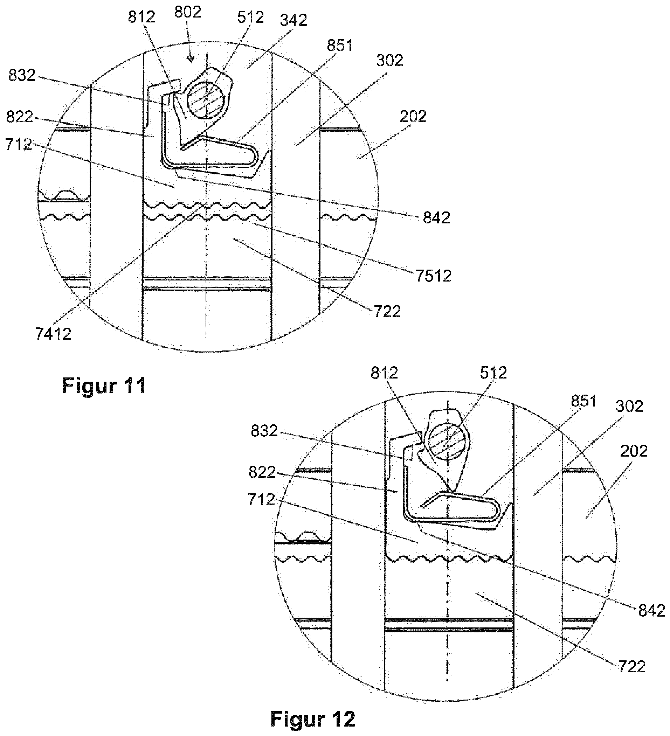

In den Figuren 11 und 12 ist eine alternative Ausführungsform des Hubgetriebes dargestellt. Die Figur 11 zeigt das Hubgetriebe 802 im geöffneten Zustand, so dass die Stelleinheit 202 gegenüber der Trageinheit 302 verschiebbar ist. In der Figur 12 ist das Hubgetriebe 802 im geschlossenen Zustand, so dass die Stelleinheit 202 gegenüber der Trageinheit 302 festgelegt ist.

Die Bewegung des Zahnsteins 712 erfolgt mittels das Hubgetriebes 802, welches von der Spannachse 512 betätigt wird. Hierzu ist auf der Spannachse 512 ein radial vorstehender Nocken 812 drehfest angebracht. Wie sich aus Figur 11, ist an dem Zahnstein 712 ein Kopplungsabschnitt 822 ausgebildet, der jeweils eine als Hubfläche 832 und eine als Druckfläche 842 ausgebildete Steuerfläche aufweist. Dabei ist die Druckfläche 842 auf einer der Verzahnung 7412 gegenüberliegenden Rückseite ausgebildet. Zwischen der Hubfläche 832 und der Druckfläche 842 ist der Nocken 812 angeordnet, so dass die Nockenkontur in Kontakt mit der Hubfläche 832 und der Druckfläche 842 bringbar ist. Der Nocken 812 wird bei der Überführung aus der geöffneten in die geschlossene Position über den unteren Totpunkt hinwegbewegt, mit anderen Worten bewegt sich der Nocken 812 zunächst auf den Zahnstein 712 zu und spannt gleichzeitig das Federelement 851 vor, bis dieser den unteren Totpunkt passiert und anschließend das Federelement 851 wieder entspannt wird, jedoch im geschlossenen Zustand, wie der Figur 12 zu entnehmen, noch unter Vorspannung steht. Dabei ist der Nocken 812 so geneigt, dass das Federelement 851 eine Kraft in Schließrichtung in den Nocken 812 einleitet, mit anderen Worten drückt die das Federelement 851 den Nocken 812 in die geschlossene Positition.

Ein wesentlicher Vorteil des erfindungsgemäßen Hubgetriebes 8, 801, 802 ist, dass der Arbeitshub für die Crashaktivierung unabhängig von dem Klemmhub des Spanngetriebes 6, 601 vorgegeben werden kann, so dass für die Stelleinheit 2, 201, 202 und die Crasheinrichtung 7, 701 eine optimierte Betätigung erreicht werden kann.

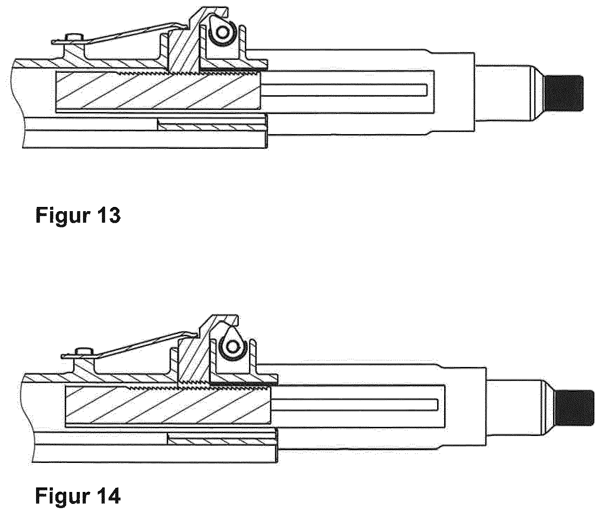

Figur 13 und Figur 14 zeigen eine weitere alternative Ausführung der Hubeinrichtung in gegeschlossenen und geöffnetem Zustand. Diese Ausführung ist im Prinzip ähnlich aufgebaut wie die in Figur 12 und Figur 11 dargestellte Ausführung. Im Unterschied dazu ist jedoch kein Federelement 851 zwischen dem Nocken 812 und dem Zahnstein 712 angeordnet. Stattdessen ist ein Federelement 852, im dargestellten Beispiel als Blattfeder ausgebildet, mit ihrem festen Ende 8521 an der Trageinheit 302 befestigt und drückt mit ihrem freien Ende 8522 den Zahnstein 712 entgegen der Hubrichtung H gegen die Zahnplatte 722 an, so dass diese mit ihren Verzahnungen 7412 und 7512 formschlüssig ineinander eingreifen.

Die zuletzt dargestellte Ausführungsform hat unter anderem die Vorteile, dass ein größerer Bauraum für das Federelement 852 zur Verfügung steht. Entsprechend kann die Federcharakteristik in weiten Grenzen angepasst werden, so dass der Zahnstein 712 in jedem Betriebszustand mit ausreichender und gleichbleibender Federkraft gegen die Zahnplatte 722 angedrückt wird, und somit eine sichere formschlüssige Verbindung gewährleistet ist. Darüber hinaus ist diese Anordnung besonders montagefreundlich: Bei bereits verbauter Spannachse 512 kann einfach der Zahnstein 712 in die Trageinheit 312 eingesetzt werden, und anschließend kann das Federelement 852 an der Trageinheit 302 befestigt werden.

### Bezugszeichenliste

- 1: Lenksäule
- 2,201,202: Stelleinheit
- 21,211: Mantelrohr
- 22: Lenkspindel
- 221: Biegestreifen / Biegedraht
- 23: Abschnitt
- 231: Schlitz
- 241: Wand
- 251, 261: Seitenschenkel
- 271, 281: Schenkel
- 291: Bohrung
- 3, 302: Trageinheit
- 301: Anschlag
- 31, 32: Seitenabschnitten
- 33: Schlitz
- 34, 342: Führung
- 4: Konsoleneinheit
- 5: Spanneinrichtung
- 51, 511, 512: Spannachse
- 54, 541: Spannhebel
- 55: Schiene
- 6, 601: Spanngetriebe
- 61, 62, 611, 621: Nockenscheibe
- 63, 64, 631, 641: Nocken
- 7, 701: Crasheinrichtung
- 71, 711, 712: Zahnstein (Arretierteil)
- 72, 721,722: Zahnplatte (Eingriffsteil)
- 73, 731: Energieabsorptionseinrichtung
- 74, 75, 7411, 7412, 7511, 7512: Verzahnung (Formschlusselemente)
- 741, 751: Zähne
- 76: Längsnut
- 788: Mitnehmer
- 8, 801, 802: Hubgetriebe
- 81, 811, 812: Nocken
- 82, 821, 822: Kopplungsabschnitt
- 83, 831, 832: Hubfläche
- 84, 841, 842: Druckfläche
- 85, 851, 852: Blattfeder (Federelement)
- 8521: festes Ende
- 8522: freies Ende
- K: Klemmhub
- L: Längsachse
- S: Drehachse
- H: Hubrichtung
- LR: Längsrichtung

## Patentansprüche

1. Lenksäule (1) für ein Kraftfahrzeug, umfassend
eine Stelleinheit (2, 201, 202) mit einer in einem Mantelrohr (21, 211, 212) um ihre Längsachse (L) drehbar gelagerten Lenkspindel (22),
eine Trageinheit (3), die mit der Karosserie des Kraftfahrzeugs verbindbar ist und in der die Stelleinheit (2, 201, 202) aufnehmbar ist, und
eine Spanneinrichtung (5), die in Fixierstellung die Stelleinheit (2, 201, 202) im Normalbetrieb relativ zur Trageinheit (3, 302) festlegt und die in Freigabestellung eine Verstellung der Stelleinheit (2, 201, 202) relativ zur Trageinheit (3) zumindest in Längsrichtung (LR) freigibt, wobei die Spanneinrichtung (5) ein Betätigungselement (51, 511, 512) umfasst, welches mit einem Spanngetriebe (6, 601) zusammenwirkt, welches eine Betätigung des Betätigungselements (51, 511, 512) in einen quer zur Längsachse (L) gerichteten Klemmhub (K) zur Verspannung der Trageinheit (3) mit der Stelleinheit (2, 201, 202) umsetzt,
und wobei die Spanneinrichtung (5) mindestens ein Arretierteil (71, 711, 712) aufweist, welches sich in Längsrichtung an der Trageinheit (3) abstützt, wobei in Fixierstellung ein Formschlusselement (74, 7411, 7412) des Arretierteils (71, 711, 712) in ein Formschlusselement (75, 7511, 7512) eines mit der Stelleinheit (3) verbundenen Eingriffsteils (72, 721, 722) in Längsrichtung unverschiebbar eingreift, und in Freigabestellung das Formschlusselement (74, 7411, 7412) des Arretierteils (71, 711, 712) von dem Formschlusselement (75, 7511, 7512) des Eingriffsteils (72, 721, 722) beabstandet ist, und eine Bewegung der Stelleinheit (2, 201, 202) relativ zur Trageinheit (3, 302) in Längsrichtung (LR) freigibt,
wobei das Eingriffsteil (72, 721, 722) über eine separate Energieabsorptionseinrichtung (73, 731) mit der Stelleinheit (2, 201, 202) verbunden ist,
**dadurch gekennzeichnet,**
**dass** das Betätigungselement (51, 511, 512) mit einem vom Spanngetriebe (6, 601) separaten Hubgetriebe (8, 801, 802) verbunden ist, welches mit dem Arretierteil (71, 711, 712) verbunden ist, und eine Betätigung des Betätigungselements (51, 511, 512) umsetzt in einen Arbeitshub des Arretierteils (71, 711, 712) relativ zum Eingriffsteil (72, 721, 722), wobei der Arbeitshub des Hubgetriebes (8, 801, 802) unabhängig vom Klemmhub (K) des Spanngetriebes (6, 601) vorgebbar ist.

2. Lenksäule nach Anspruch 1, **dadurch gekennzeichnet, dass** der Arbeitshub des Hubgetriebes (8, 801, 802) quer zum Klemmhub (K) des Spanngetriebes (6, 601) gerichtet ist.

3. Lenksäule nach Anspruch 1 oder 2, **dadurch gekennzeichnet, dass** das Betätigungselement als Spannachse (51, 511, 512) ausgebildet ist, die sich quer zur Längsrichtung erstreckt und die zur Betätigung der Spanneinrichtung (5) um ihre Achse (S) drehbar ist, und auf der ein radial vorstehender Nocken (81, 811, 812) drehfest angebracht ist, und wobei das Arretierteil (71, 711, 712) einen Kopplungsabschnitt (82, 821, 822) mit mindestens einer parallel zur Spannachse liegenden Steuerfläche (83, 84) aufweist, mit der die Nockenkontur des Nockens (81, 811, 812) in Wirkeingriff bringbar ist.

4. Lenksäule nach einem der vorstehenden Ansprüche, **dadurch gekennzeichnet, dass** zwischen der Nockenkontur eines Nockens (81, 811, 812) und einer Steuerfläche (84, 841, 842) ein Federelement (85, 851, 852) angeordnet ist.

5. Lenksäule nach einem der vorstehenden Ansprüche, **dadurch gekennzeichnet, dass** an der Trageinheit (3) eine Führung (34) ausgebildet ist, in der das Arretierteil (71, 711, 712) in Richtung Eingriffsteil (72, 721, 722) verschieblich geführt ist.

6. Lenksäule nach einem der vorstehenden Ansprüche, **dadurch gekennzeichnet, dass** die Formschlusselemente (75, 7511, 7512) an dem Eingriffsteil (72, 721, 722) plattenförmig ausgebildet sind und parallel zur Spannachse (S) und parallel zur Längsachse (L) ausgerichtet ist.

7. Lenksäule nach einem der vorstehenden Ansprüche, **dadurch gekennzeichnet, dass** die Formschlusselemente als Verzahnungen (74, 7411, 7412, 75, 7511, 7512) ausgebildet sind.

8. Lenksäule nach Anspruch 3, **dadurch gekennzeichnet, dass** mindestens eine Steuerfläche als Hubfläche (83) ausgebildet ist, deren Flächennormale in Eingriffsrichtung der Formschlusselemente (74, 7411, 7412, 75, 7511, 7512) an Arretierteil (71, 711, 712) und Eingriffsteil (72, 721, 722) weist.

9. Lenksäule nach Anspruch 9, **dadurch gekennzeichnet, dass** mindestens eine Steuerfläche als Druckfläche (84) ausgebildet ist, deren Flächennormale entgegen der Eingriffsrichtung der Formschlusselemente (74, 7411, 7412, 75, 7511, 7512) an Arretierteil (71, 711, 712) und Eingriffsteil (72, 721, 722) weist.

## Claims

1. Steering column (1) for a motor vehicle, comprising an adjustment unit (2, 201, 202) with a steering spindle (22) which is mounted rotatably about its longitudinal axis (L) in a casing tube (21, 211, 212),
a supporting unit (3) which can be connected to the body of the motor vehicle and in which the adjustment unit (2, 201, 202) can be accommodated, and
a clamping device (5) which, in a securing position, secures the adjustment unit (2, 201, 202) relative to the supporting unit (3, 302) in normal operation and which, in a release position, enables an adjustment of the adjustment unit (2, 201, 202) relative to the supporting unit (3) at least in the longitudinal direction (LR),
wherein the clamping device (5) comprises an actuating element (51, 511, 512) which interacts with a clamping mechanism (6, 601) which converts an actuation of the actuating element (51, 511, 512) into a clamping stroke (K) directed transversely to the longitudinal axis (L) for clamping the supporting unit (3) to the adjustment unit (2, 201, 202),
and wherein the clamping device (5) comprises at least one locking part (71, 711, 712) which is supported on the supporting unit (3) in the longitudinal direction, wherein, in the securing position, a form-fitting element (74, 7411, 7412) of the locking part (71, 711, 712) engages non-displaceably in the longitudinal direction in a form-fitting element (75, 7511, 7512) of an engagement part (72, 721, 722) connected to the adjustment unit (3), and, in the release position, the form-fitting element (74, 7411, 7412) of the locking part (71, 711, 712) is spaced apart from the form-fitting element (75, 7511, 7512) of the engagement part (72, 721, 722), and enables a movement of the adjustment unit (2, 201, 202) relative to the supporting unit (3, 302) in the longitudinal direction (LR),
wherein the engagement part (72, 721, 722) is connected to the adjustment unit (2, 201, 202) via a separate energy absorption device (73, 731),
**characterized**
**in that** the actuating element (51, 511, 512) is connected to a lifting mechanism (8, 801, 802) which is separate from the clamping mechanism (6, 601) and which is connected to the locking part (71, 711, 712), and converts an actuation of the actuating element (51, 511, 512) into a working stroke of the locking part (71, 711, 712) relative to the engagement part (72, 721, 722), wherein the working stroke of the lifting mechanism (8, 801, 802) is predeterminable independently of the clamping stroke (K) of the clamping mechanism (6, 601).

2. Steering column according to Claim 1, **characterized in that** the working stroke of the lifting mechanism (8, 801, 802) is directed transversely to the clamping stroke (K) of the clamping mechanism (6, 601).

3. Steering column according to Claim 1 or 2, **characterized in that** the actuating element is designed as a clamping axle (51, 511, 512) which extends transversely to the longitudinal direction and which can rotate about its axis (S) for the actuation of the clamping device (5), and on which a radially projecting cam (81, 811, 812) is mounted in a rotationally fixed manner, and wherein the locking part (71, 711, 712) comprises a coupling portion (82, 821, 822) with at least one control surface (83, 84) which is situated parallel to the clamping axle and with which the cam contour of the cam (81, 811, 812) can be brought into operative engagement.

4. Steering column according to one of the preceding claims, **characterized in that** a spring element (85, 851, 852) is arranged between the cam contour of a cam (81, 811, 812) and a control surface (84, 841, 842) .

5. Steering column according to one of the preceding claims, **characterized in that** a guide (34) is formed on the supporting unit (3), in which guide the locking part (71, 711, 712) is displaceably guided in the direction of the engagement part (72, 721, 722) .

6. Steering column according to one of the preceding claims, **characterized in that** the form-fitting elements (75, 7511, 7512) on the engagement part (72, 721, 722) are configured as plates and oriented parallel to the clamping axis (S) and parallel to the longitudinal axis (L).

7. Steering column according to one of the preceding claims, **characterized in that** the form-fitting elements are configured as serrations (74, 7411, 7412, 75, 7511, 7512).

8. Steering column according to Claim 3, **characterized in that** at least one control surface is designed as a lifting surface (83) whose normal to the surface points in the engagement direction of the form-fitting elements (74, 7411, 7412, 75, 7511, 7512) on the locking part (71, 711, 712) and the engagement part (72, 721, 722).

9. Steering column according to Claim 9, **characterized in that** at least one control surface is designed as a pressing surface (84) whose normal to the surface points counter to the engagement direction of the form-fitting elements (74, 7411, 7412, 75, 7511, 7512) on the locking part (71, 711, 712) and the engagement part (72, 721, 722).

## Revendications

1. Colonne de direction (1) pour un véhicule automobile, comportant
une unité de réglage (2, 201, 202) dotée d'un arbre de direction (22) monté rotatif autour de son axe longitudinal (L) dans un tube d'enveloppe (21, 211, 212), une unité de support (3) qui peut être reliée à la carrosserie du véhicule automobile et dans laquelle l'unité de réglage (2, 201, 202) peut être reçue, et
un dispositif de serrage (5) qui, dans la position de fixation, fixe l'unité de réglage (2, 201, 202) par rapport à l'unité de support (3, 302) en fonctionnement normal et qui, dans la position de libération, autorise un déplacement de l'unité de réglage (2, 201, 202) par rapport à l'unité de support (3) au moins dans la direction longitudinale (LR),
le dispositif de serrage (5) comportant un élément d'actionnement (51, 511, 512), lequel coopère avec une transmission de serrage (6, 601), laquelle convertit un actionnement de l'élément d'actionnement (51, 511, 512) en une course de serrage (K) orientée transversalement à l'axe longitudinal (L) pour le serrage de l'unité de support (3) sur l'unité de réglage (2, 201, 202),
et le dispositif de serrage (5) comprenant au moins une partie de blocage (71, 711, 712), laquelle s'appuie sur l'unité de support (3) dans la direction longitudinale, un élément de complémentarité de forme (74, 7411, 7412) de la partie de blocage (71, 711, 712) venant en prise de manière non déplaçable dans la direction longitudinale dans un élément de complémentarité de forme (75, 7511, 7512) d'une partie d'entrée en prise (72, 721, 722) reliée à l'unité de réglage (3) dans la position de fixation, et l'élément de complémentarité de forme (74, 7411, 7412) de la partie de blocage (71, 711, 712) étant espacé de l'élément de complémentarité de forme (75, 7511, 7512) de la partie d'entrée en prise (72, 721, 722) dans la position de libération, et autorisant un déplacement de l'unité de réglage (2, 201, 202) par rapport à l'unité de support (3, 302) dans la direction longitudinale (LR),
la partie d'entrée en prise (72, 721, 722) étant reliée à l'unité de réglage (2, 201, 202) par le biais d'un dispositif d'absorption d'énergie séparé (73, 731),
**caractérisée en ce que**
l'élément d'actionnement (51, 511, 512) est relié à une transmission de levage (8, 801, 802) séparée de la transmission de serrage (6, 601), laquelle transmission de levage est reliée à la partie de blocage (71, 711, 712) et convertit un actionnement de l'élément d'actionnement (51, 511, 512) en une course de travail de la partie de blocage (71, 711, 712) par rapport à la partie d'entrée en prise (72, 721, 722), la course de travail de la transmission de levage (8, 801, 802) pouvant être prédéfinie indépendamment de la course de serrage (K) de la transmission de serrage (6, 601).

2. Colonne de direction selon la revendication 1,
**caractérisée en ce que** la course de travail de la transmission de levage (8, 801, 802) est orientée transversalement à la course de serrage (K) de la transmission de serrage (6, 601).

3. Colonne de direction selon la revendication 1 ou 2,
**caractérisée en ce que** l'élément d'actionnement est réalisé sous forme d'axe de serrage (51, 511, 512) qui s'étend transversalement à la direction longitudinale et qui est rotatif autour de son axe (S) pour l'actionnement du dispositif de serrage (5), et sur lequel une came (81, 811, 812) faisant saillie radialement est montée de manière solidaire en rotation, et la partie de blocage (71, 711, 712) comprenant une partie d'accouplement (82, 821, 822) dotée d'au moins une surface de commande (83, 84) située parallèlement à l'axe de serrage, surface de commande avec laquelle le contour de la came (81, 811, 812) peut être amené en prise fonctionnelle.

4. Colonne de direction selon l'une des revendications précédentes, **caractérisée en ce qu'**un élément ressort (85, 851, 852) est disposé entre le contour d'une came (81, 811, 812) et une surface de commande (84, 841, 842).

5. Colonne de direction selon l'une des revendications précédentes, **caractérisée en ce qu'**un guide (34) est réalisé sur l'unité de support (3), guide dans lequel la partie de blocage (71, 711, 712) est guidée de manière mobile en direction de la partie d'entrée en prise (72, 721, 722).

6. Colonne de direction selon l'une des revendications précédentes, **caractérisée en ce que** les éléments de complémentarité de forme (75, 7511, 7512) sont réalisés en forme de plaques sur la partie d'entrée en prise (72, 721, 722) et sont orientés parallèlement à l'axe de serrage (S) et parallèlement à l'axe longitudinal (L).

7. Colonne de direction selon l'une des revendications précédentes, **caractérisée en ce que** les éléments de complémentarité de forme sont réalisés sous forme de dentures (74, 7411, 7412, 75, 7511, 7512).

8. Colonne de direction selon la revendication 3,
**caractérisée en ce qu'**au moins une surface de commande est réalisée sous forme de surface de levage (83) dont la normale à la surface est orientée dans le sens d'entrée en prise des éléments de complémentarité de forme (74, 7411, 7412, 75, 7511, 7512) sur la partie de blocage (71, 711, 712) et la partie d'entrée en prise (72, 721, 722).

9. Colonne de direction selon la revendication 9,
**caractérisée en ce qu'**au moins une surface de commande est réalisée sous forme de surface de pression (84) dont la normale à la surface est orientée en sens inverse au sens d'entrée en prise des éléments de complémentarité de forme (74, 7411, 7412, 75, 7511, 7512) sur la partie de blocage (71, 711, 712) et la partie d'entrée en prise (72, 721, 722).
